# EUROPÄISCHE PATENTSCHRIFT

(11) **EP 3 791 147 B1**
(45) Veröffentlichungstag und Bekanntmachung des Hinweises auf die Patenterteilung: **19.02.2025**
(21) Anmeldenummer: 19719202.4
(22) Anmeldetag: 12.04.2019
(51) Int. Cl.: G01K 1/16, G01K 1/08, G01K 13/02

(54) **MESSEINSATZ MIT SCHUTZROHR**
MEASURING INSERT HAVING A PROTECTIVE TUBE
INSERT DE MESURE COMPORTANT UNE GAINE DE PROTECTION

(30) Priorität: 09.05.2018 DE 102018111167
(43) Veröffentlichungstag der Anmeldung: 17.03.2021
(73) Patentinhaber: Endress+Hauser Wetzer GmbH+Co. KG, 87484 Nesselwang (DE)
(72) Erfinder: PEUKER, Christian, 87509 Immenstadt (DE); VRDOLJAK, Pavo, 87484 Nesselwang (DE); UMKEHRER, Alfred, 87659 Hopferau (DE)
(74) Vertreter: Koslowski, Christine Adelheid
(86) Internationale Anmeldenummer: PCT/EP2019/059524
(87) Internationale Veröffentlichungsnummer: WO 2019/214904

(56) Entgegenhaltungen:
- DE-A1- 102008 054 618
- DE-A1- 102010 030 075
- DE-B3- 102006 034 248
- DE-T5- 112011 102 974
- DE-T5- 112011 102 974
- DE-T5- 112015 003 303
- DE-T5- 112015 003 303
- JP-A- 2015 152 336
- US-A1- 2009 296 781

## Beschreibung

Die Erfindung bezieht sich auf eine Vorrichtung zur Bestimmung und/oder Überwachung zumindest einer Prozessgröße eines Mediums. Das Medium befindet sich bevorzugt in einem Behältnis, beispielsweise einem Behälter oder einer Rohrleitung. Die Vorrichtung umfasst einen Messeinsatz mit zumindest einem, insbesondere in einem Endbereich des Messeinsatzes angeordneten, Sensorelement zur Erfassung der Prozessgröße, und einen Eintauchkörper zur Aufnahme des Messeinsatzes, welcher Eintauchkörper zumindest zeit- und/oder teilweise in das Medium hineinragt, und welcher Eintauchkörper den Messeinsatz zumindest in einem dem Medium zugewandten Teilbereich, in welchem sich bevorzugt das zumindest eine Sensorelement befindet, umgibt. Bei dem Sensorelement handelt es sich beispielsweise um einen Temperatursensor, welcher zur Erfassung der Prozessgröße Temperatur dient.

Thermometer sind in unterschiedlichsten Ausgestaltungen aus dem Stand der Technik bekannt geworden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials oder eine davon abgeleitete Größe mit der Temperatur in Zusammenhang bringen, wie beispielsweise den elektrischen Widerstand bei Verwendung von Widerstandselementen oder den thermoelektrischen Effekt im Falle von Thermoelementen. Dagegen wird bei Strahlungsthermometern, insb. Pyrometern, zur Bestimmung der Temperatur einer Substanz deren Wärmestrahlung ausgenutzt. Die jeweils zugrundeliegenden Messprinzipien sind jeweils in einer Vielzahl von Veröffentlichungen beschrieben worden.

Bei einem Temperatursensor in Form eines sogenannten Dünnschicht-Sensors, insbesondere eines Resistance Temperature Detectors (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Sensorelemente werden sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Die Widerstandselemente werden häufig mittels eines Lötverfahrens innerhalb eines Sensorkopfes, beispielsweise eine Fühlerspitze, und insbesondere auf den Innenboden einer z. B. aus Edelstahl bestehenden Hülse, eingebracht. Als Lötverfahren wird in vielen Fällen eine sogenannte SMD-Lötung durchgeführt, bei welcher zunächst ein Lot auf ein erstes Bauteil aufgebracht wird und anschließend ein zweites Bauteil aufgesetzt und durch Erhitzung mit dem ersten Bauteil verlötet wird. Für das Beispiel eines Sensorkopfes eines Widerstandsthermometers wird üblicherweise zunächst eine definierte Menge Lot in festem Zustand ("Lotplättchen") in den Sensorkopf eingebracht und durch anschließendes Erhitzen mit dem Innenboden des Sensorkopfes verschmolzen. Das Sensorelement wird dann mit seiner metallisierten Seite in das Lot eingetaucht und auf diese Weise innerhalb des Sensorkopfes verlötet. Verfahren zum Herstellen einer derartigen Lotverbindung für ein Thermometer sind beispielsweise aus der Offenlegungsschrift DE102006048448A1 sowie aus der bisher unveröffentlichten deutschen Patentanmeldung mit dem Aktenzeichen DE102015112199A1 bekannt geworden. Grundsätzlich hat bei einem entsprechenden Widerstandsthermometer die Lotverbindung einen großen Einfluss auf die thermischen Eigenschaften des Thermometers, insbesondere auf die thermische Ankopplung zwischen Widerstandselement und Sensorkopf. Entsprechende Thermometer werden von der Anmelderin beispielsweise unter der Bezeichnung Quicksens hergestellt und vertrieben.

Alternativ zu solchen Thermometern, bei welchen das Widerstandselement mit dem Sensorkopf verlötet ist, sind zahlreiche Thermometer bekannt geworden, bei denen die Temperatursensoren eingeschlossen und/oder gekapselt werden, insbesondere in Keramikpulvern, wie beispielsweise Magnesiumoxid (MgO) oder Aluminiumoxid (Al₂O₃), oder in einem, insbesondere aushärtenden, Keramikverguss. Dieses Vorgehen dient einerseits der Fixierung der Temperatursensoren. Außerdem sorgt die Kapselung, beispielsweise in einem Keramikpulver, dafür, dass die Anschlussleitungen des Temperatursensors auch bei hohen Temperaturen, insb. bei Temperaturen von etwa bis zu 600°C, voneinander und vom Gehäuse des Sensorkopfes, insbesondere einer Fühlerspitze, welches häufig aus einem Metall oder eine Metalllegierung gefertigt ist, zu isolieren. Ein Verfahren zur Herstellung eines derart ausgestalteten Thermometers ist beispielsweise aus der Offenlegungsschrift DE02329239A1 bekannt geworden. Um einen Temperatursensor zu vergießen, werden mindestens eine vorgebbare Menge einer ersten und einer zweiten Komponente einer Vergussmasse in eine Gießform, insbesondere eine Fühlerspitze, eingebracht. Anschließend wird die Fühlerspitze gerüttelt und/oder in Schwingungen mit einer vorgebbaren Frequenz versetzt wird. Auch derartige Thermometer werden von der Anmelderin hergestellt und vertrieben, und tragen beispielsweise die Bezeichnung Strongsens.

Zur Bestimmung und/oder Überwachung der Temperatur des jeweiligen Mediums wird das Sensorelement vermittels des Eintauchkörpers zumindest teilweise und/oder zeitweise mit dem Medium in thermischen Kontakt gebracht. Es findet ein Wärmaustausch zwischen der Vorrichtung und dem Medium statt, bis sich ein thermisches Gleichgewicht einstellt. Bei Vorliegen thermischen Gleichgewichts weisen das Sensorelement, der Eintauchkörper und das Medium im Wesentlichen die gleiche Temperatur, im Folgenden als Gleichgewichtstemperatur bezeichnet, auf. Bis dieses Gleichgewicht erreicht ist, findet eine Wärmeausbreitung vom Medium zur Vorrichtung oder umgekehrt statt. Unter Wärmeausbreitung wird in diesem Zusammenhang also sowohl ein Wärmefluss vom Medium zum Temperatursensor, entsprechend dem Falle, dass das Medium eine höhere Temperatur aufweist als das Thermometer, als auch in umgekehrter Richtung, im Falle, dass das Thermometer eine höhere Temperatur aufweist, verstanden. Die Zeit, welche vergeht, bis sich nach einer Temperaturänderung ΔT des Mediums ein thermisches Gleichgewicht einstellt, korreliert dabei mit der Ansprechzeit des Thermometers. Die Ansprechzeit hängt dabei grundsätzlich vom Aufbau der Vorrichtung, von den Wärmeleitfähigkeiten der jeweils verwendeten Materialien sowie von der jeweiligen geometrischen Ausgestaltung und der Güte von zwischen verschiedenen Materialien bestehenden Kontakte ab.

Nun ist es so, dass Sensorelemente beziehungsweise Messeinsätze von Thermometern häufig in einen Eintauchkörper, insbesondere ein Schutzrohr, eingebracht werden. Solche Thermometer-Schutzrohre, welche beispielsweise aus keramischen oder metallischen Materialen gefertigt sein können, werden vielfach verwendet, um die Beständigkeit des Messeinsatzes gegen Chemikalien, Abrasion, Korrosion oder extreme Temperaturen zu verbessern. Innerhalb der Prozessmesstechnik ist dies insbesondere in Bereichen der Chemie-, oder Ölindustrie oder auch im Bereich von Kraftwerken etc. von großer Wichtigkeit. Eine fehlerfreie Funktion setzt aber je nach Bauart unter Umständen voraus, dass der Messeinsatz am Boden des Schutzrohrs anliegt. Nur dann wird die Wärme schnell aus dem Prozess thermisch an das temperaturabhängige Sensorelement, das in dem Messeinsatz angeordnet ist, geleitet. Konstruktiv wird daher die Spitze des Messeinsatzes von Federn nach gegen den Schutzrohrboden gedrückt, um bspw. einen Metall-zu-Metall-Kontakt sicherzustellen. Der zur Verfügung stehende Federweg beträgt dabei üblicherweise ca. 8-10 mm.

Der Aufbau und die Anforderungen an diese Thermometer sind bspw. durch VDI/VDE 3511 Blatt 5 Technische Temperaturmessungen und DIN 43772 Metall-Schutzrohre und Halsrohre für Thermoelemente und Widerstandsthermometer bestimmt.

Beim Einbau beziehungsweise beim Zusammenbau eines entsprechenden Thermometers können jedoch verschiedene Fehler auftreten. Durch eine unpassende Auslegung von Messeinsatz- zu Schutzrohrlänge, unpassende Dichtungen oder fehlerhafte Installation, kann es dazu kommen, dass der Federweg nicht ausreicht, um den Messeinsatz gegen den Boden zu pressen. Durch den fehlenden metallischen Kontakt, entsteht eine erhebliche Reduktion der Messgenauigkeit und einer Vergrößerung der Ansprechzeit des Thermometers auf eine Temperaturänderung des Mediums. Aus dem Stand der Technik ist es zur Gewährleistung eines guten Kontaktes beispielsweise bekannt geworden, sogenannte Feder-Schrauben zu verwenden, die durch das Verschrauben des Messeinsatzes mit einem Kopfgehäuse vermittels dieser Feder-Schrauben den Messeinsatz gegen den Boden des Schutzrohres drücken. In dieser Hinsicht sei beispielsweise auf das von der Anmelderin unter der Bezeichnung iTemp vertriebene Thermometer verwiesen. Weiterhin beschreiben die Dokumente DE102013114140A1 oder DE102014101968A1 den Einsatz von weiteren Federelementen zur Verbesserung des Kontakts zwischen Schutzrohr und Messeinsatz. JP 2015-152336 A offenbart ein Schutzrohr mit einem daraus entnehmbaren Messeinsatz und einer dazwischen angeordneten Koppeleinheit.

Trotz der beschriebenen Maßnahmen kann bei einer derartigen Konstruktion nicht ohne Weiteres überprüft werden, ob der jeweilige Kontakt zwischen dem Messelement und dem Schutzrohr ausreichend gut ist. Eine weitere Problematik stellen die Dimensionierung des Schutzrohres und die des Messeinsatzes da. Es kann üblicherweise nicht vermieden werden, dass zumindest ein geringer Luftspalt zwischen einer Außenwandung des Messeinsatzes und einer Innenwandung des Schutzrohres verbleibt, welcher sich nachteilig auf die Messperformance des Thermometers auswirkt.

Daher liegt der vorliegenden Erfindung die Aufgabe zugrunde, die Ansprechzeiten von Messgeräten mit Messeinsätzen, welche zumindest teilweise in einem Eintauchkörper angeordnet sind, zu verbessern.

Diese Aufgabe wird gelöst durch eine Vorrichtung gemäß dem Anspruch 1.

Erfindungsgemäß umfasst die Koppeleinheit Graphit als einen Festschmierstoff. Aus dem Stand der Technik ist es bekannt geworden, sogenannte Wärmeleitpasten zwischen dem Messeinsatz und Eintauchkörper anzuordnen. Diese haben jedoch den Nachteil, dass der jeweilige thermische Kontakt zwischen dem Messeinsatz und Eintauchkörper nicht gut reproduzierbar und die Güte des Kontakts, beispielsweise aufgrund fortschreitender Korrosion, nicht konstant ist. Festschmierstoffe bieten den Vorteil, dass sie sich leichter und vor allem präzise und reproduzierbar in den Eintauchkörper einbringen lassen. Sie eignen sich insbesondere auch zum Ausgleich von Formtoleranzen einer Außenwandung des Messeinsatzes und einer Innenwandung des Eintauchkörpers. Es kann somit ein reproduzierbarer thermischer Kontakt zwischen Eintauchkörper und Messeinsatz erreicht werden.

Die Erfindung wird anhand der nachfolgenden Zeichnungen näher erläutert. Es zeigt:
Fig. 1: ein Thermometer mit einem Messeinsatz und einem Schutzrohr gemäß Stand der Technik,
Fig. 2: eine erste Ausgestaltung einer erfindungsgemäßen Vorrichtung mit einer Koppeleinheit, und
Fig. 3: eine zweite Ausgestaltung einer erfindungsgemäßen Vorrichtung mit einer Koppeleinheit, bei welcher die Koppeleinheit innerhalb des Eintauchkörpers fixiert ist.

In den Figuren sind gleiche Merkmale mit gleichen Bezugszeichen gekennzeichnet.

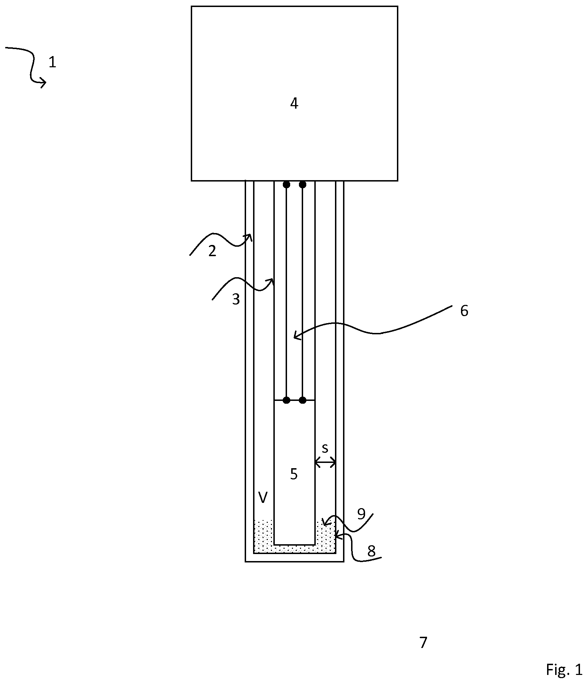

In Fig.1 ist eine schematische Abbildung eines Thermometers 1 mit einem Eintauchkörper 2, einem Messeinsatz 3, und einer Elektronik 4 gemäß Stand der Technik gezeigt. Der Messeinsatz 3 ist in den Eintauchkörper 2 eingebracht und umfasst ein Sensorelement 5, welches im vorliegenden Fall ein Temperatursensor in Form eines Widerstandselements ist, der über die Anschlussleitungen 6 elektrisch kontaktiert und mit der Elektronik 4 verbunden ist. In anderen Ausgestaltungen kann die Elektronik 4 auch separat vom Messeinsatz 3 und Eintauchkörper 2 angeordnet sein. Auch muss es sich bei dem Sensorelement 5 nicht notwendigerweise um ein Widerstandselement handeln, oder die Anzahl der verwendeten Anschlussleitungen 6 muss nicht notwendigerweise zwei betragen. Vielmehr kann je nach angewendetem Messprinzip eine unterschiedliche Anzahl von Anschlussdrähten 6 verwendet werden.

Wie bereits dargelegt, hängt die Messgenauigkeit, insbesondere die Ansprechzeit, eines derartigen Thermometers 1 in hohem Maße von den jeweiligen Materialien und, insbesondere thermischen, Kontaktierungen, insbesondere im Bereich des Temperatursensors 5 ab. Der Temperatursensor 5 steht mittelbar, d.h. über den Eintauchkörper 2, mit dem Medium 7 in thermischem Kontakt. Um einen ausreichenden mechanischen, und damit einhergehend einen thermischen, Kontakt zwischen dem Eintauchkörper 2 und dem Messeinsatz 3, insbesondere dem Temperatursensor 5, zu gewährleiten, wird gemäß Stand der Technik häufig ein Federelement [nicht gezeigt] verwendet. Außerdem ist es üblich, ein Innenvolumen V des Eintauchkörpers 2 zumindest in einem den Temperatursensor 5 teilweise umgebenden Teilbereich 8 mit einer Wärmeleitpaste 9 zu füllen. Allerdings kann durch solche Maßnahmen keine gleichbleibende Kontaktierung zwischen dem Temperatursensor 5 und dem Eintauchkörper 2 gewährleistet werden. Häufig verbleibt beispielsweise ein Luftspalt s, welcher zu einer deutlichen Reduktion der Ansprechzeit und/oder der Messgenauigkeit des Thermometers 1 führen kann.

Dieser Problematik begegnet die vorliegende Erfindung durch die Verwendung einer Koppeleinheit 10, welche in den Eintauchkörper 2 einbringbar ist. Für die Ausgestaltung der Koppeleinheit 10 sind zahlreiche Möglichkeiten denkbar, von denen nachfolgend einige bevorzugte Ausgestaltungen beispielhaft beschrieben werden. Die genaue Ausgestaltung hängt dabei unter anderem von diversen Vorgaben bezüglich des Messgeräts 1 also auch von der der jeweiligen geometrischen Situation ab.

Die erfindungsgemäße Koppeleinheit 10 ist grundsätzlich dazu ausgestaltet, ein Innenvolumen V zwischen einer inneren Wandung des Eintauchkörpers 2 und einer äußeren Wandung des Messeinsatzes 3 zumindest in dem Teilbereich T, in welchem sich das Sensorelement 5 befindet, auszufüllen und eine mechanische Kopplung zwischen dem Eintauchkörper 2 und dem Messeinsatz 3 zu gewährleisten. Die Koppeleinheit 10 dient also der Verbesserung der thermischen Leitfähigkeit innerhalb des Thermometers 1 und damit einhergehend der erzielbaren Messgenauigkeit sowie der jeweiligen Ansprechzeit.

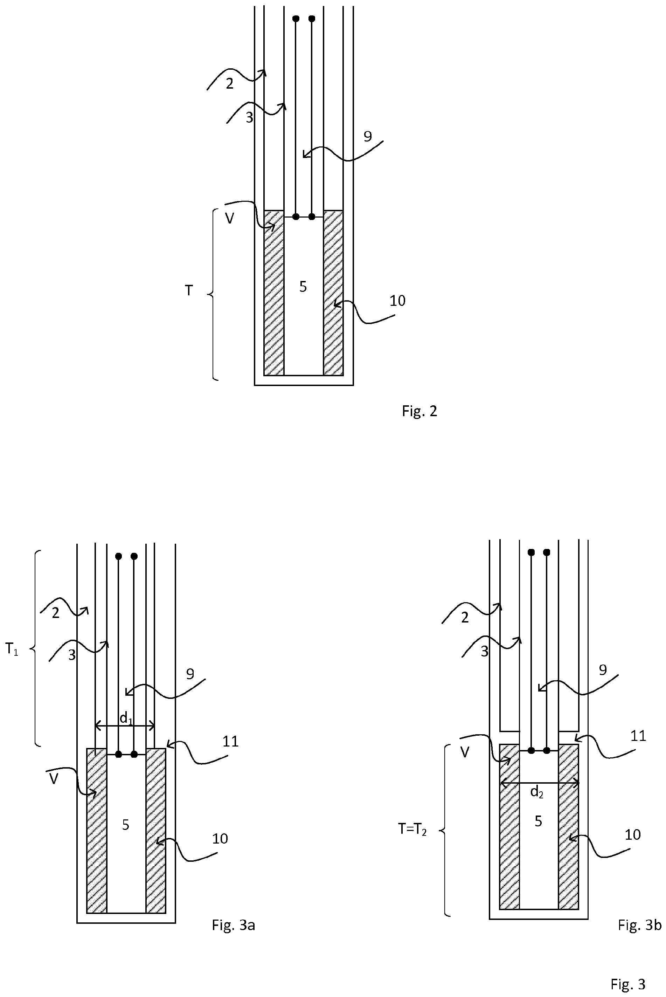

Eine mögliche Ausgestaltung für ein erfindungsgemäßes Thermometer 1 ist Gegenstand von Fig. 2. Die Koppeleinheit 10 füllt das Innenvolumen V zwischen dem Eintauchkörper 2 und dem Messeinsatz 3 im Bereich des Sensorelements 5. Durch die Koppeleinheit 10 wird somit eine mechanische, und damit eine thermische, Kopplung zwischen dem Eintauchkörper 2 und dem Messeinsatz 3 bewirkt. Ein guter und gleichbleibender thermischer Kontakt zwischen dem Eintauchkörper 2 und dem Messeinsatz 3 kann gewährleistet werden. Erfindungsgemäß wird das Auftreten des zuvor beschriebenen Luftspaltes s vermieden.

Die Koppeleinheit 10 umfasst erfindungsgemäß Graphit als einen Festschmierstoff. Gemäß Beispiele, die nicht unter den Schutzumfang der beanspruchten Erfindung fallen, enthält der Festschmierstoff Bornitrid, Kupfer, oder Messing. Gemäß Beispiele, die nicht unter den Schutzumfang der beanspruchten Erfindung fallen, sind verschiedene Varianten denkbar. Beispielsweise kann die Koppeleinheit 10 in Form eines Pulvers, in Form einer Beschichtung, oder als fester Körper ausgestaltet sein. Je nach Ausgestaltung wird entweder erst der Messeinsatz 3 in den Eintauchkörper 2 eingebracht, bevor die Koppeleinheit 10 hinzugefügt wird. Alternativ kann es für andere Ausgestaltungen von Vorteil sein, wenn zuerst die Koppeleinheit 10 und anschließend der Messeinsatz 3 in den Eintauchkörper 2 eingebracht wird.

Erfindungsgemäß ist die Koppeleinheit 10 innerhalb des Eintauchkörpers 2 fixiert. Es versteht sich von selbst, dass andere Ausgestaltungen auch eine Fixierung der Koppeleinheit im Bereich des Messeinsatzes 3 umfassen können. Auf derartige, ebenfalls unter die vorliegende Erfindung fallende Ausgestaltungen wird jedoch im Rahmen der hier gezeigten Figuren nicht im Detail eingegangen.

In Fig. 3 sind beispielhaft zwei mögliche Ausgestaltungen einer erfindungsgemäßen Vorrichtung 1 gezeigt, bei welchen die Koppeleinheit 10 innerhalb des Eintauchkörpers 2 fixiert ist. Hierzu umfasst die Vorrichtung 1 ein Befestigungsmittel 11 zur Befestigung der Koppeleinheit. In den gezeigten Ausgestaltungen ist das Befestigungsmittel 11 jeweils Teil des Eintauchkörpers 2. In anderen, hier nicht dargestellten Ausgestaltungen, kann das Befestigungsmittel 11 jedoch auch als separate Einheit, oder als Teil der Koppeleinheit 10, oder auch als Teil des Messeinsatzes 3 oder des Eintauchkörpers 2 ausgestaltet sein.

Gemäß der Ausgestaltung nach Fig. 3a weist die Innenwandung des Eintauchkörpers 2 einen Absatz auf. Dadurch ist der Innendurchmesser d₁ des Eintauchkörpers 2 in einem dem Medium abgewandten Teilbereich T₁ kleiner als der Innendurchmesser d₂ in einem dem Medium zugewandten Teilbereich T₂. Durch den Absatz wird sichergestellt, dass die Koppeleinheit 10 im Teilbereich T=T₂ fixiert wird. Fig. 3b zeigt eine zweite mögliche Ausgestaltung des Befestigungsmittels 11. Gemäß Fig. 3b weist die Innenwandung des Eintauchkörpers 2 einen Vorsprung auf, welcher als Befestigungsmittel 11 dient. Der Innendurchmesser des Eintauchkörpers 2 ist im Bereich des Vorsprungs gegenüber dem Innendurchmesser d₂ im dem Medium 7 zugewandten Teilbereich T₂ verringert. In beiden Fällen verhindert das Befestigungsmittel insbesondere eine axiale Bewegung der Koppeleinheit 10, beispielsweise im Falle, dass der Messeinsatz 3 aus dem Eintauchkörper 2 entfernt oder in den Eintauchkörper 2 eingebracht wird.

### Bezugszeichenliste

- 1: Vorrichtung
- 2: Eintauchkörper
- 3: Messeinsatz
- 4: Elektronik
- 5: Sensorelement
- 6: Anschlussdrähte
- 7: Medium
- 8: Teilbereich
- 9: Wärmeleitpaste
- 10: Koppeleinheit
- 11: Befestigungsmittel

- s: Luftspalt
- d₁, d₂: Innendurchmesser des Eintauchkörpers
- T₁, T₂: Teilbereiche des Eintauchkörpers
- V: Innenvolumen

## Patentansprüche

1. Vorrichtung (1) zur Bestimmung und/oder Überwachung zumindest einer Prozessgröße eines Mediums (7) umfassend
- einen Messeinsatz (3) mit zumindest einem, insbesondere in einem Endbereich des Messeinsatzes (3) angeordneten, Sensorelement (5) zur Erfassung der Prozessgröße, und
- einen Eintauchkörper (2) in Form eines Schutzrohrs zur Aufnahme des Messeinsatzes (3), welcher Eintauchkörper (2) zumindest zeit- und/oder teilweise in das Medium (7) hineinragt und welcher Eintauchkörper (2) den Messeinsatz (3) zumindest in einem dem Medium (7) zugewandten Teilbereich, in welchem sich bevorzugt das zumindest eine Sensorelement (5) befindet, umgibt, wobei zumindest eine Koppeleinheit (10) vorgesehen ist, welche in den Eintauchkörper (2) einbringbar ist, und welche dazu ausgestaltet ist, ein Innenvolumen (V) zwischen einer inneren Wandung des Eintauchkörpers (2) und einer äußeren Wandung des Messeinsatzes (3) zumindest in dem Teilbereich (T), in welchem sich das Sensorelement (5) befindet, auszufüllen und eine mechanische und thermische Kopplung zwischen dem Eintauchkörper (2) und dem Messeinsatz (3) zu gewährleisten, **dadurch gekennzeichnet,dass** kein Luftspalt zwischen der äußeren Wandung des Messeinsatzes (3) und der inneren Wandung des Eintauchkörpers (2) besteht, wobei die Koppeleinheit (10) in Form eines festen Körpers ausgestaltet ist und Graphit als einen Festschmierstoff umfasst, und wobei die Koppeleinheit (10) innerhalb des Eintauchkörpers (2) fixiert ist und der Messeinsatz (3), insb. infolge eines Austauschs des Messeinsatzes (3), aus dem Eintauchkörper (2) ohne ein Entfernen der Koppeleinheit (10) entnehmbar ist.

2. Vorrichtung (1) nach Anspruch 1,
wobei die Koppeleinheit (10) in Form einer Beschichtung ausgestaltet ist.

3. Vorrichtung (1) nach Anspruch 1 oder 2,
wobei die Koppeleinheit (10) in Form einer Folie oder als rohrförmiger Körper ausgestaltet ist.

4. Vorrichtung (1) nach zumindest einem der vorherigen Ansprüche,
wobei die Koppeleinheit (10) dazu ausgestaltet ist, auftretende Vibrationen des Eintauchkörpers (2) und/oder des Messeinsatzes (3) zu dämpfen, indem die Koppeleinheit (10) derart ausgestaltet ist, dass sie Bewegungen des Messeinsatzes (3) relativ zum Eintauchkörper (2), in radialer Richtung, verhindert.

5. Vorrichtung (1) nach zumindest einem der vorherigen Ansprüche,
wobei die Koppeleinheit (10) dazu ausgestaltet ist, eine, insbesondere reversible, Bewegung des Messeinsatzes (3) relativ zum Eintauchkörper (2), in axialer Richtung zu ermöglichen, indem die Koppeleinheit (10) derart ausgestaltet ist, dass sie unterschiedliche, insbesondere reversible, Ausdehnungen aufgrund von Änderungen der Temperatur in Längsrichtung kompensiert.

6. Vorrichtung (1) nach zumindest einem der vorherigen Ansprüche,
wobei die Koppeleinheit (10) und/oder der Eintauchkörper (2) zumindest ein Befestigungsmittel (11) zur Befestigung der Koppeleinheit (10) im Innenvolumen des Eintauchkörpers (2) aufweisen.

7. Vorrichtung (1) nach Anspruch 6,
wobei eine Innenwandung des Eintauchkörpers (2) einen Absatz aufweist, der als Befestigungsmittel (11) dient, wobei der Innendurchmesser (d₂) des Eintauchkörpers (2) in einem dem Medium zugewandten Teilbereich (T₂) größer ist als der Innendurchmesser (d₁) des Eintauchkörpers (2) in einem dem Medium abgewandten Teilbereich (T₁).

8. Vorrichtung (1) nach Anspruch 6,
wobei eine Innenwandung des Eintauchkörpers (2) einen Vorsprung aufweist, der als Befestigungsmittel (11) dient, wobei der Innendurchmesser des Eintauchkörpers (2) im Bereich des Vorsprungs gegenüber dem dem Medium (7) zugewandten Teilbereich (T₂) verringert ist.

9. Vorrichtung (1) nach Anspruch 6,
wobei es sich bei dem Befestigungsmittel (11) um eine, insbesondere mechanische, Passverbindung handelt, insbesondere wobei das Befestigungsmittel (11) zumindest einen Sprengring oder einen Passring aufweist.

10. Vorrichtung (1) nach Anspruch 6,
wobei es sich bei dem Befestigungsmittel (11) um einen Klebstoff handelt.

11. Vorrichtung (1) nach Anspruch 6,
wobei das Befestigungsmittel (11) zumindest teilweise aus einem gesinterten Werkstoff hergestellt ist.

## Claims

1. A device (1) for determining and/or monitoring at least one process variable of a medium (7), comprising
- a measuring insert (3) with at least one sensor element (5), in particular arranged in an end section of the measuring insert (3), for recording the process variable, and
- an immersed body (2) in the form of a protective tube for mounting the measuring insert (3), wherein the immersed body (2) projects at least temporarily and/or partially into the medium (7) and wherein the immersed body (2)
encloses the measuring insert (3) at least in one section that faces the medium (7), in which the at least one sensor element (5) is preferably located,
wherein at least one coupling unit (10) is envisaged, which can be introduced into the immersed body (2) and is configured to fill an internal volume (V) between an inner wall of the immersed body (2) and an outer wall of the measuring insert (3) at least in the section (T) in which the sensor element (5) is located, and to guarantee both a mechanical and thermal connection between the immersed body (2) and the measuring insert (3),
**characterized in that** there is no air gap between the outer wall of the measuring insert (3) and the inner wall of the immersed body (2),
wherein the coupling unit (10) has the form of a solid body and uses graphite as a solid lubricant, and wherein the coupling unit (10) is fixed in position inside the immersed body (2), and the measuring insert (3) can be removed from the immersed body (2) without removing the coupling unit (10), in particular for replacing the measuring insert (3).

2. A device (1) as claimed in claim 1,
wherein the coupling unit (10) is in the form of a coating.

3. A device (1) as claimed in claim 1 or 2,
wherein the coupling unit (10) is in the form of a foil or a tubular body.

4. A device (1) according to at least one of the preceding claims,
wherein the coupling unit (10) is designed to dampen vibrations that occur in the immersed body (2) and/or of the measuring insert (3) by configuring the coupling unit (10) in such way that it prevents movements of the measuring insert (3) relative to the immersed body (2) in the radial direction.

5. A device (1) according to at least one of the preceding claims,
wherein the coupling unit (10) is configured to facilitate a movement, in particular a reversible movement, of the measuring insert (3) relative to the immersed body (2) in the axial direction by configuring the coupling unit (10) in such way that it compensates various, in particular reversible, expansions in the longitudinal direction that occur due to changes in temperature.

6. A device (1) according to at least one of the preceding claims,
wherein the coupling unit (10) and/or the immersed body (2) exhibit at least one fixing (11) for attaching the coupling unit (10) in the internal volume of the immersed body (2).

7. A device (1) as claimed in claim 6,
wherein an inner wall of the immersed body (2) exhibits a ridge that serves as a fixing (11), wherein the internal diameter (d2) of the immersed body (2) in a section that faces toward the medium (T2) is greater than the internal diameter (d1) of the immersed body (2) in a section that faces away from the medium (T1).

8. A device (1) as claimed in claim 6,
wherein an inner wall of the immersed body (2) exhibits a projection that serves as a fixing (11), wherein the internal diameter of the immersed body (2) is smaller in the area of the projection than in the section (T2) that faces away from the medium (7).

9. A device (1) as claimed in claim 6,
wherein the fixing (11) is a face joint, in particular a mechanical joint, in particular wherein the fixing (11) exhibits at least one circlip or one retaining ring.

10. A device (1) as claimed in claim 6,
wherein the fixing (11) is an adhesive.

11. A device (1) as claimed in claim 6,
wherein the fixing (11) is produced at least in part from a sintered material.

## Revendications

1. Dispositif (1) destiné à la détermination et/ou à la surveillance d'au moins une grandeur de process d'un produit (7), lequel dispositif comprend :
- un insert de mesure (3) avec au moins un élément capteur (5), notamment disposé dans une zone d'extrémité de l'insert de mesure (3), lequel élément capteur est destiné à mesurer la grandeur de process, et
- un corps d'immersion (2) sous la forme d'un tube de protection pour recevoir l'insert de mesure (3), lequel corps d'immersion (2) pénètre au moins temporairement et/ou partiellement dans le produit (7) et lequel corps d'immersion (2) entoure l'insert de mesure (3) au moins dans une zone partielle tournée vers le produit (7), zone dans laquelle se trouve de préférence l'au moins un élément capteur (5),
au moins une unité de couplage (10) étant prévue, laquelle unité peut être introduite dans le corps d'immersion (2) et laquelle unité étant conçue pour remplir un volume intérieur (V) entre une paroi intérieure du corps d'immersion (2) et une paroi extérieure de l'insert de mesure (3), au moins dans la zone partielle (T) dans laquelle se trouve l'élément capteur (5), et pour assurer un couplage mécanique et thermique entre le corps d'immersion (2) et l'insert de mesure (3), **caractérisé en ce**
**qu'**il n'y a pas d'interstice entre la paroi extérieure de l'insert de mesure (3) et la paroi intérieure du corps d'immersion (2),
l'unité de couplage (10) étant conçue sous la forme d'un corps solide et comprenant du graphite en tant que lubrifiant solide, et l'unité de couplage (10) étant fixée à l'intérieur du corps d'immersion (2) et l'insert de mesure (3) pouvant être retiré du corps d'immersion (2), notamment à la suite d'un remplacement de l'insert de mesure (3), sans que l'unité de couplage (10) ne soit retirée.

2. Dispositif (1) selon la revendication 1,
pour lequel l'unité de couplage (10) est conçue sous la forme d'un revêtement.

3. Dispositif (1) selon la revendication 1 ou 2,
pour lequel l'unité de couplage (10) est conçue sous la forme d'une feuille ou d'un corps tubulaire.

4. Dispositif (1) selon au moins l'une des revendications précédentes,
pour lequel l'unité de couplage (10) est conçue pour amortir les vibrations du corps d'immersion (2) et/ou de l'insert de mesure (3) qui se produisent, en ce que l'unité de couplage (10) est conçue de telle sorte qu'elle empêche les mouvements de l'insert de mesure (3) par rapport au corps d'immersion (2), dans la direction radiale.

5. Dispositif (1) selon au moins l'une des revendications précédentes,
pour lequel l'unité de couplage (10) est conçue pour permettre un mouvement, notamment réversible, de l'insert de mesure (3) par rapport au corps d'immersion (2) dans la direction axiale, en ce que l'unité de couplage (10) est conçue de telle sorte qu'elle compense des dilatations différentes, notamment réversibles, dues à des modifications de la température dans la direction longitudinale.

6. Dispositif (1) selon au moins l'une des revendications précédentes,
pour lequel l'unité de couplage (10) et/ou le corps d'immersion (2) comportent au moins un moyen de fixation (11) pour fixer l'unité de couplage (10) dans le volume intérieur du corps d'immersion (2).

7. Dispositif (1) selon la revendication 6,
pour lequel une paroi intérieure du corps d'immersion (2) présente un épaulement qui sert de moyen de fixation (11), le diamètre intérieur (d₂) du corps d'immersion (2) dans une zone partielle (T₂) tournée vers le produit étant plus grand que le diamètre intérieur (d₁) du corps d'immersion (2) dans une zone partielle (T₁) opposée au produit.

8. Dispositif (1) selon la revendication 6,
pour lequel une paroi intérieure du corps d'immersion (2) présente une saillie qui sert de moyen de fixation (11), le diamètre intérieur du corps d'immersion (2) étant réduit dans la zone de la saillie par rapport à la zone partielle (T₂) tournée vers le produit (7).

9. Dispositif (1) selon la revendication 6,
pour lequel le moyen de fixation (11) est une liaison d'ajustement, notamment mécanique, le moyen de fixation (11) comportant notamment au moins un jonc d'arrêt ou une bague d'ajustage.

10. Dispositif (1) selon la revendication 6,
pour lequel le moyen de fixation (11) est un adhésif.

11. Dispositif (1) selon la revendication 6,
pour lequel le moyen de fixation (11) est au moins partiellement fabriqué à partir d'un matériau fritté.
